Europäisches Patentamt

**European Patent Office** (11) Numéro de publication: **0 033 908**

Office européen des brevets **B1**

(12) **FASCICULE DE BREVET EUROPEEN**

(45) Date de publication du fascicule du brevet: **18.05.83** (51) Int. Cl.³: **B 23 B 31/10**

(21) Numéro de dépôt: **81100646.9**

(22) Date de dépôt: **29.01.81**

(54) **Dispositif d'entraînement en rotation d'une pièce cylindrique.**

| | |
|---|---|
| (30) Priorité: **06.02.80 FR 8002557** | (73) Titulaire: **PONT-A-MOUSSON S.A.**<br>**91, Avenue de la Libération**<br>**F-54017 Nancy (FR)** |
| (43) Date de publication de la demande:<br>**19.08.81 Bulletin 81/33** | (72) Inventeur: **Fuminier, Claude**<br>**63 rue du Bois le Prêtre**<br>**F-54700 Pont-A-Mousson (FR)** |
| (45) Mention de la délivrance du brevet:<br>**18.05.83 Bulletin 83/20** | |
| (84) Etats contractants désignés:<br>**AT CH DE GB IT LI** | (74) Mandataire: **Weil, Roger et al,**<br>**c/o Centre de Recherches de Pont-à-Mousson BP 28**<br>**F-54700 Pont-à-Mousson (FR)** |
| (56) Documents cités:<br>**DE - A - 2 019 796**<br>**DE - B - 1 246 359**<br>**FR - A - 1 156 896**<br>**GB - A - 489 240**<br>**US - A - 3 911 768**<br>**US - A - 4 094 104** | |

Courier Press, Leamington Spa, England.

Dispositif d'entraînement en rotation d'une pièce cylindrique

La presente invention est relative à un dispositif d'entraînement en rotation d'une pièce cylindrique. Elle s'applique en particulier aux machines-outils telles que les tours.

On connaît des dispositifs de ce genre dans lesquels le serrage de la pièce à entraîner est obtenu grâce à un manchon dilatable radialement par compression axiale un moyen d'un système vis-écrou.

C'est ainsi que le brevet GB—A—489 240 qui révèle les caractéristiques du préambule de la revendication 1 décrit un mors élastique composite destiné à serrer et à entraîner en rotation un tube au moyen d'un système vis-écrou et d'organes de poussée qui compriment axialement le mors élastique et l'expansent radialement en vue d'obtenir un serrage radial du tube sur une broche rotative elle-même entraînée en rotation par une roue dentée motrice. Le système vis-écrou est lui-même actionné par un volant de manoeuvre manuelle.

Or la Demanderesse s'est posé le problème de créer un dispositif d'entraînement en rotation d'une pièce cylindrique comportant des moyens d'actionnement du système vis-écrou simples et bien adaptés à une utilisation industrielle répétitive à cadence élevée.

Ce problème est résolu par un dispositif tel qu'il est présenté par le contenu de la revendication 1.

Ainsi, par simple serrage ou desserrage du frein et actionnement du moteur d'entraînement en rotation de la pièce cylindrique, celle-ci peut être serrée par le manchon dilatable ou libérée.

Suivant un premier mode de réalisation, le système vis-écrou est constitué d'un écrou unique et d'une vis unique entourant tous deux coaxialement la pièce cylindrique.

Dans un autre mode d'exécution, la partie femelle du système vis-écrou est constituée par un anneau coulissant qui comporte une série de trous taraudés parallèles à l'axe de la pièce tubulaire et répartis autour de cet axe, la partie mâle de ce système vis-écrou étant constituée par une série de vis coopérant avec ces trous, immobilisées en translation axiale et sur chacune desquelles est fixé un pignon, l'ensemble des pignons engrenant avec une couronne dentée solidaire de ladite partie mobile du frein.

D'autres caractéristiques et avantages de l'invention apparaîtront au cours de la description qui va suivre. Aux dessins annexés, donnés uniquement à titre d'exemple:

la Fig. 1 est une vue schématique en coupe longitudinale d'une machine de tronçonnage de tuyaux métalliques équipée d'un dispositif d'entraînement suivant le premier mode d'exécution de l'invention;

la Fig. 2 est une vue schématique prise en coupe suivant la ligne 2—2 de la Fig. 1;

les Fig. 3 et 5 sont des demi-vues en coupe longitudinale, à plus grande échelle que la Fig. 1, d'un dispositif d'entraînement conforme au deuxième mode d'exécution de l'invention;

la Fig. 4 est une vue partielle en coupe prise suivant la ligne 4—4 de la Fig. 3.

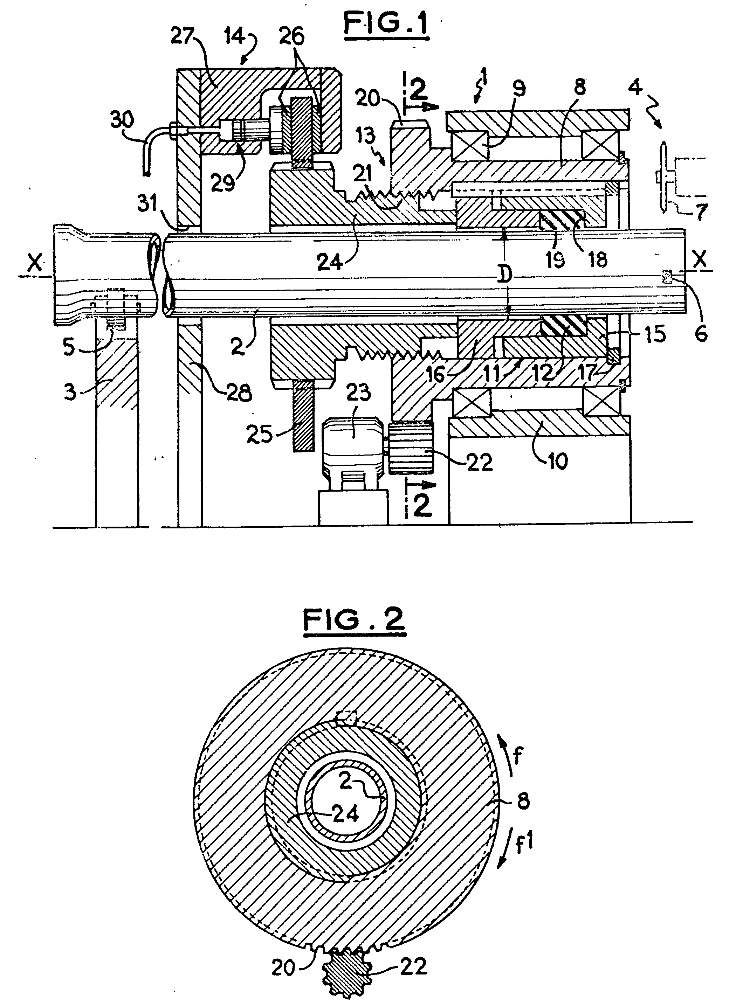

La machine de tronçonnage représentée aux Fig. 1 et 2 comprend un dispositif 1 d'entraînement en rotation d'un tuyau 2 d'axe horizontal X—X interposé entre un support 3 et un dispositif de tronçonnage 4. Le support 3 est un bâti muni de deux galets fous 5 d'axes parallèles à l'axe X—X. Le dispositif de tronçonnage 4 peut comporter un outil coupant 6 à déplacement radial ou, en variante, comme représenté en traits mixtes à la Fig. 1, un disque-meule 7 à mouvement pendulaire.

Le dispositif d'entraînement 1 comprend une broche creuse 8 montée au moyen de paliers 9 de roulement et de butée dans un bâti 10, un presse-garniture 11 muni d'une manchette 12 en élastomère formant mors annulaire, un système vis-écrou 13, et un frein 14.

Le presse-garniture 11 est constitué de deux pièces 15, 16 clavetées coulissantes dans la broche creuse 8. La pièce 15 la plus proche du dispositif de tronçonnage 4 bute contre un jonc de retenue 17 reçu dans une gorge intérieure de la broche 8. Les pièces 15 et 16 ont en section la forme de deux L emboîtés télescopiquement l'un dans l'autre et un même diamètre intérieur D légèrement supérieur au diamètre extérieur du tuyau 2 à serrer. Elles définissent deux épaulements radiaux 18, 19 en regard l'un de l'autre délimitant axialement une chambre annulaire de longueur variable, ouverte vers l'axe X—X, dans laquelle est logée la manchette 12. Celle-ci, de section rectangulaire, a le même diamètre extérieur que la chambre annulaire et, au repos, ne fait pratiquement pas saillie hors de cette chambre.

L'extrémité de la broche 8 opposée au dispositif de tronçonnage 4 présente une denture extérieure 20 et un filetage intérieur 21. La denture 20 engrène avec un pignon 22 calé sur l'arbre de sortie d'un moteur ou d'un groupe moto-réducteur 23 à deux sens de rotation et à deux vitesses, et un manchon 24 extérieurement fileté, formant vis-poussoir, est vissé dans le filetage 21 et bute contre le pièce 16 du presse-garniture 11.

Sur l'extrémité extérieure du manchon 24 est clavet coulissant un disque de freinage 25 qui passe entre deux garnitures ou patins de freinage 26. Un patin 26 est porté par une branche d'un étrier fixe 27 solidaire d'un bâti 28 et l'autre par le piston d'un vérin 29 prévu dans l'autre branche de cet étrier et alimenté en fluide sous pression par une conduite 30. Plusieurs ensembles de freinage 26—29—30 peuvent être répartis autour de l'axe X—X.

Le bâti 28 présente une ouverture 31 d'axe X—X dont le diamètre est au moins égal au diamètre intérieur de manchon 24, lui-même au moins égal au diamètre D des pièces 15 et 16.

Le fonctionnement est le suivant.

Le moteur 23 étant à l'arrêt et le système vis-écrou 13 desserré, un tuyau 2 est mis en place sur les galets de support 5 et introduit à travers l'ouverture 31 du bâti 28 et à travers la broche 8 et le mors tubulaire 12. Le mors 12 est à l'état libre, et le frein 14 est desserré.

Pour entraîner en rotation le tuyau 2, on serre le frein 14 (26 sur 25), ce qui immobilise en rotation le manchon ou vis-poussoir 24, puis le moteur 23 est mis en rotation à petite vitesse de façon que la broche 8 tourne dans le sens $f$ (Fig. 2) qui doit être le sens de rotation du tuyau 2 pour son tronçonnage. Le sens du filetage 21 est tel qu'il assure le serrage du mors 12 pour ce sens de rotation de la broche. Il s'agit donc d'un filetage à droite dans le cas illustré à la Fig. 2.

La vis-poussoir 24 opère alors un mouvement de vissage par rapport à la broche 8 formant écrou. Il en résulte un déplacement en translation de cette vis-poussoir 24 par rapport à la broche 8, dans le sens du rapprochement vers le mors 12 et par conséquent dans le sens du rapprochement des deux pièces 15, 16 du presse-garniture 11. Le mors 12 est ainsi comprimé axialement et, étant en une matière incompressible, il se dilate radialement et vient serrer le tuyau 2, qui est alors rendu positivement solidaire de la broche 8. Il est à noter que le déplacement de la vis-poussoir 24 est rendu possible grâce au clavetage coulissant du disque de frein 25, qui reste fixe en translation.

Bien entendu, le frein 14 n'est serré qu'un court instant, jusqu'à ce que le tuyau 2 tourne à la même vitesse que la broche 8 et soit serré d'une façon suffisante pour son tronçonnage, afin de limiter le déplacement de la vis-poussoir 24. Puis le frein est desserré par mise à la décharge du ou des vérins 29, les patins 26 s'écartant du disque 25, et le moteur 23 passe à grande vitesse sans changer de sens. Après desserrage du frein, la vis-poussoir 24 ne se déplace plus axialement mais continue d'être entraînée en rotation par la broche 8, sans mouvement relatif par rapport à celle-ci, et garde sa position de serrage du mors 12 par l'intermédiaire du presse-garniture 11.

Pendant toute l'opération de tronçonnage, le frein reste desserré. Lorsque le tronçonnage est terminé, le moteur 23 est arrêté. Pendant l'arrêt du tuyau 2, la broche 8 et la vis-poussoir 24 n'effectuent aucun mouvement relatif de rotation l'une par rapport a l'autre, de sorte que le mors 12 reste serré.

Pour desserrer le mors 12 et libérer le tuyau 2 qui vient d'être tronçonné, on fait tourner le moteur 23 à petite vitesse en sens inverse, c'est-à-dire, dans cet exemple, dans le sens de la flèche $f^1$ pour la broche 8 (Fig. 2). Le tuyau 2 est alors entraîné en rotation dans le sens de la flèche $f^1$ par le mors 12 encore serré. Puis on serre un bref instant le frein 14, ce qui produit un mouvement relatif de translation axiale de la vis-poussoir 24 par rapport à la broche-écrou 8, car cette vis-poussoir est immobilisée par le disque 25 alors que la broche 8 est entraînée en rotation dans le sens de la flèche $f^1$. La vis-poussoir 24 de dévisse à l'intérieur de la broche-écrou 8 et permet au presse-garniture 11 de relâcher le mors annulaire élastique 12, lequel repousse la pièce 16 par son élasticité et revient à sa forme initiale en libérant le tuyau 2. Après cette libération du tuyau 2, on arrête le moteur 23 et on évacue le tuyau tronçonné 2, ou bien on le fait avancer en vue d'un deuxième tronçonnage dans le cas d'un découpage de rondelles tubulaires.

En variante, le disque 25 pourrait être fixé au manchon 24 et l'étrier 27 coulisser axialement sur le bâti 28. De plus, d'autres types de frein pourraient être utilisés à la place du frein à disque 14.

Le dispositif 1 d'entraînement en rotation est utilisable pour toute une gamme de différents diamètres de tuyaux 2 à tronçonner. Si l'on veut changer de diamètre de tuyau, par exemple serrer et entraîner un tuyau 2 de plus petit diamètre, il n'y a que trois pièces à changer: le mors annulaire élastique 12 et les deux pièces 15—16 du presse-garniture 11. La reconversion est donc simple et facile, dans la limite définie par le diamètre du manchon 24 et de l'ouverture 31 du bâti 28.

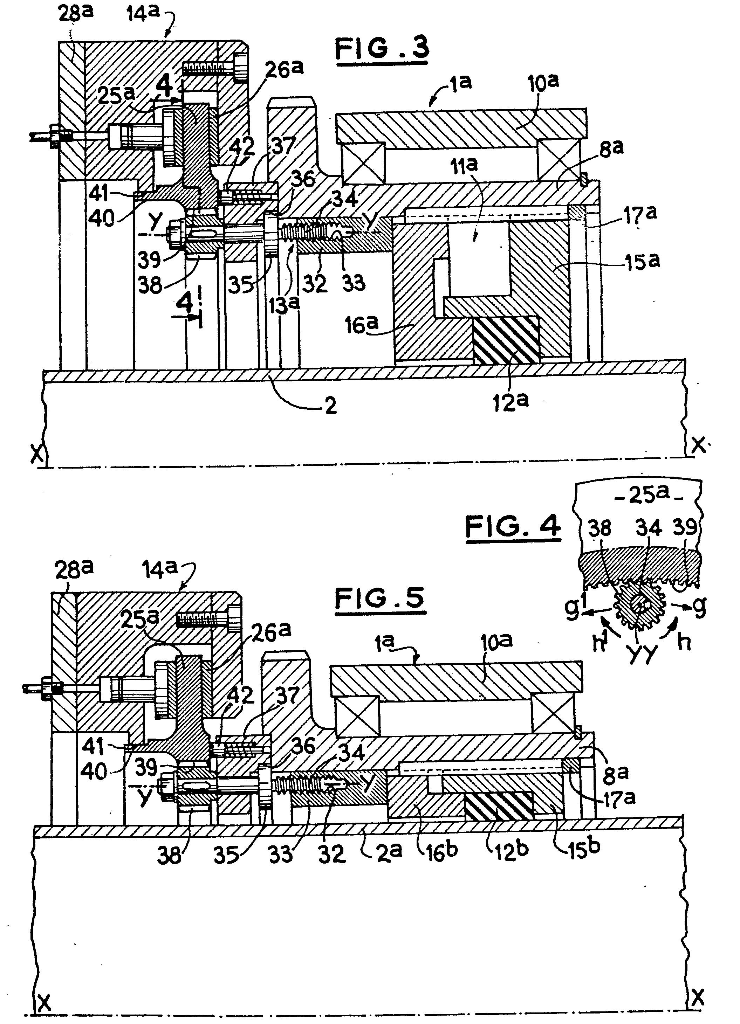

On retrouve dans le dispositif $1^a$ des Fig. 3 et 4 les parties essentielles du dispositif 1, qui seront désignées par les mêmes références suivies de l'indice $a$: dans la broche creuse $8^a$, qui tourne dans le bâti $10^a$, sont clavetées coulissantes les deux pièces $15^a$, $16^a$ du presse-garniture $11^a$, la pièce $15^a$ étant en butée comme un jonc $17^a$. La manchette $12^a$ est retenue entre ces deux pièces $15^a$ et $16^a$.

Le dispositif $1^a$ diffère du dispositif 1 par les points suivants relatifs au système vis-écrou $13^a$.

L'élément de poussée du presse-garniture est un anneau 32 qui coulisse dans la broche $8^a$ et présente dans sa tranche d'extrémité extérieure une série de trous taraudés 33 d'axes Y—Y parallèles à l'axe X—X et répartis sur sa périphérie. Dans chacun de ces trous est engagée une vis 34 munie d'une collerette 35. Cette dernière est maintenue à rotation mais fixe en translation axiale entre la face d'entrémité de la broche $8^a$ et une gorge 36 d'une bague de maintien 37 fixée à la broche par des vis (non représentées). Le prolongement de chaque vis 34 traverse un perçage de la bague 37, et un pignon 38 est calé sur son extrémité.

Tous les pignons 38 entrènent avec une couronne dentée 39 prévue sur la périphérie intérieure d'un disque de freinage $25^a$ qui fait partie du frein $14^a$, qui est constitué de la même façon que le frein 14 de la Fig. 1. Le disque $25^a$ présente une protubérance annulaire ou moyeu 40 qui est guidé à coulissement par une portée de centrage 41 solidaire du bâti 28ᵃ du frein.

Des tétons axiaux 42 chargés par un ressort et répartis sur la périphérie de la bague 37 portent à leur extrémité libre une garniture de friction qui s'applique sur le disque 25ᵃ.

Le fonctionnement de dispositif 1ᵃ, analogue dans l'ensemble à celui du dispositif 1, est le suivant.

Lorsque le tuyau 2 à tronçonner doit être serré par le mors 12ᵃ, le disque de frein 25ᵃ est serré par les garnitures de friction 26ᵃ et la broche 8ᵃ est entraînée en rotation à petite vitesse. Le serrage du disque 25ᵃ provoque son immobilisation, alors que les vis 34, solidaires en rotation de la broche 8ᵃ par l'intermédiaire de la bague 37, sont entraînées autour de l'axe X—X. Il en résulte que les têtes de vis 38 en forme de pignons roulent sur la couronne dentée interne 39 du disque 25ᵃ immobilisé. Ceci entraîne le dévissage des vis 34 dans leurs trous taraudés 33 et par conséquent le déplacement axial de l'anneau 32, qui pousse la pièce 16ᵃ du presse-garniture 11ᵃ vers le mors 12ᵃ pour comprimer axialement celui-ci. Il y a donc serrage du tuyau 2, comme précédemment. Lorsque le tuyau 2 tourne à la même vitesse que la broche 8ᵃ avec le degré de serrage désiré, on desserre le frein 14ᵃ; le disque de frein 25ᵃ, n'étant plus bloqué, est entraîné par les pignons 38 et se met à tourner autour de l'axe X—X à la même vitesse. Les vis 34 ne tournent plus autour de leurs axes propres Y—Y, de sorte que l'anneau 32 et la pièce 16ᵃ du presse-garniture ne se déplacent plus axialement.

A titre d'exemple, avec un filetage à droite des vis 34, les mouvements de rotation s'effectuent pendant le serrage suivant les flèches *g, h* de la Fig. 4.

Pour le desserrage du tuyau 2 tronçonné, on arrête d'abord la rotation de la broche 8ᵃ en arrêtant le moteur. Puis on fait tourner le moteur en sens inverse à petite vitesse, et donc la broche 8ᵃ dans le sens *g¹* inverse du sense précédent *g*, et l'on serre le frein 14ᵃ pendant le temps nécessaire à la désolidarisation complète du tuyau 2 et du mors 12ᵃ. Le disque 25ᵃ étant immobilisé alors que la broche 8ᵃ, l'anneau 32 et les vis 34 tournent autour de l'axe X—X dans le sens *g¹*, les têtes de vis 38 roulent sur la couronne dentée 39 dans le sens *h¹* inverse du sens *h*. Ces vis 34, immobilisées en translation par leur collerette 35, se vissent alors dans les trous taraudés 33 de l'anneau 32, ce qui provoque le déplacement axial de ce dernier dans le sens de l'éloignement du mors 12ᵃ. Le mors 12ᵃ est ainsi décomprimé et libéré axialement et revient à sa forme initiale. Lorsque le tuyau 2 est libéré, on arrête le moteur et par conséquent la broche 8ᵃ, et le tuyau 2 peut être retiré et évacué, ou bien avancé pour un nouveau tronçonnage.

Les tétons frottants 42 servent, après desserrage du frein 14ᵃ, à décoller le disque 25ᵃ du patin fixe 26ᵃ pour éviter toute friction nuisible à cet emplacement, et également à assurer une légère friction entre le disque 25ᵃ et la bague tournante 37 afin d'éviter tout desserrage intempestif du tuyau 2 pendant le fonctionnement de la machine du fait des inerties.

On a illustré à la Fig. 3 les pièces de serrage 15ᵃ, 16ᵃ, 12ᵃ pour un tuyau 2 de petit diamètre. La Fig. 5 montre le même dispositif mais muni de pièces de serrage 15ᵇ, 16ᵇ, 12ᵇ pour un tuyau 2ᵃ de plus grand diamètre. On voit que, comme dans l'exemple des Fig. 1 et 2, seules ces trois pièces sont à changer pour adapter le dispositif à des tuyaux de différents diamètres.

Si l'on compare les dispositifs 1 et 1ᵃ, l'avantage du dispositif 1 réside dans sa simplicité; mais, en revanche, du fait de l'importance du frottement au contact de la vis 24 et de l'écrou 8, due au grand diamètre du filetage 21, on maîtrise difficilement la force de serrage exercée sur la manchette 12. Aussi le dispositif 1 de la Fig. 1 n'est-il pleinement satisfaisant que pour de petites machines traitant des pièces tubulaires ou cylindriques de petit diamètre, où le couple de frottement est faible par rapport au couple de serrage.

Pour les grands diamètres, pour les raisons qui viennent d'être indiquées, il est préférable d'utiliser le dispositif 1ᵃ, dans lequel on a remplacé la grande vis unique 24 par une série de vis 34 de faible diamètre. Pour un effort de serrage réel donné, le couple de frottement est trés sensiblement diminué, car il est proportionnel au diamètre des vis 34 (ou de la vis 24 dans le premier mode d'exécution). Le couple de frottement devient alors faible par rapport au couple de serrage, et l'on maîtrise très bien la valeur de serrage.

**Revendications**

1. Dispositif d'entraînement en rotation d'une pièce cylindrique (2—2a) au moyen d'un manchon élastique (12—12a—12b) compressible axialement et expansible radialement pour constituer un mors annulaire en prise sur ladite pièce cylindrique (2—2a) sous l'action d'un presse-garniture (16—16a—16b) et d'un organe de poussée (24—32), lui-même actionné par un système vis-écrou (13—13a) dont l'un des éléments (20) est une roue dentée entraînée par le moteur (23) d'entraînement en rotation de la pièce cylindrique (2—2a), caractérisé en ce que l'autre élément (24—34, 38) du système vis-écrou (13—13a) est pourvu d'une denture circulaire engrenant avec un disque (25—25a) dont l'immobilisation provoque dans le système vis-écrou (13—13a) une rotation relative entre l'écrou (20) entraîné en rotation par le moteur (23) et la vis (24—34, 38) et par conséquent un déplacement axial relatif de l'un (24—32) des éléments du système vis-écrou (13—13a) par rapport à l'autre, le sens de la rotation relative et du déplacement axial relatif dépendant du sens de rotation du moteur (23).

2. Dispositif suivant la revendication 1, caractérisé en ce que ladite partie mobile (25—25a) est une disque solidaire en rotation de l'élément associé (24—34) du système vis-écrou (13—13a) et disposé entre deux patins de freinage (26—26a) immobiles en rotation.

3. Dispositif suivant la revendication 2, caractérisé en ce que les patins (26) sont portés par un étrier fixe (27), le disque (25) étant claveté coulissant sur l'élément associé (24) du système vis-écrou (13).

4. Dispositif suivant l'une quenconque des revendications 1 à 3, caractérisé en ce que le système vis-écrou (13) et constitué d'un écrou unique (8) et d'une vis unique (24) entourant tous deux coaxialement la pièce cylindrique (2).

5. Dispositif suivant l'une quelconque des revendications 1 à 3, caractérisé en ce que la partie femelle du système vis-écrou (13a) est constituée par un anneau coulissant (32) qui comporte une série de trous taraudés (33) parallèles à l'axe (X—X) de la pièce tubulaire (2—2a) et répartis autour de cet axe, la partie mâle de ce système vis-écrou étant constituée par une série de vis (34) coopérant avec ces trous (33), immobilisées en translation axiale et sur chacune desquelles est fixé un pignon (38), l'ensemble des pignons engrenant avec une couronne dentée (39) solidaire de ladite partie mobile (25a) de frein (14a).

6. Dispositif suivant la revendication 5, caractérisé en ce que des éléments de friction (42) portés par une pièce (37) solidaire en rotation de l'anneau (32) sont sollicités élastiquement contre ladite partie mobile (25a) du frein (14a).

7. Dispositif suivant l'une quelconque des revendications 1 à 6, caractérisé en ce que l'élément axialement mobile (24—32) du système vis-écrou (13—13a) agit sur le manchon dilatable (12a) par l'intermédiaire d'un organe (16—16a) claveté coulissant par rapport à l'autre élément (8) du système vis-écrou ou à une pièce (8a) solidaire en rotation de cet autre élément (34a).

8. Dispositif suivant l'une quelconque des revendications 1 à 7, caractérisé en ce que le manchon dilatable (12a) est une manchette en élastomère.

9. Dispositif suivant l'une quelconques des revendications 1 à 8, caractérisé en ce que le moteur (23) est un moteur à deux sens de rotation.

10. Dispositif suivant l'une quelconque des revendications 1 à 9, caractérisé en ce que le moteur (23) est à deux vitesses.

**Patentansprüche**

1. Vorrichtung für den Drehantrieb eines zylindrischen Teils (2—2a) mittels einer elastischen Hülse (12—12a—12b), die axial zusammendrückbar und radial ausdehnbar ist, zur Bildung einer ringförmigen Backe, die unter der Wirkung einer Stopfbüchse (16—16a—16b) und eines Schuborgans (24—32) am zylindrischen Teil (2—2a) anliegt, welches Schuborgan seinerseits von einem Schraube-Mutter-System (13—13a) bewegt wird, dessen eines Element (20) ein Zahnad ist, das vom Motor (23) für den Drehantrieb des zylindrischen Teils (2—2a) angetrieben wird, dadurch gekennzeichnet, daß das andere Element (24—34—38) des Schraube-Mutter-Systems (13—13a) mit einer Kreisverzahnung versehen ist, die mit einer Scheibe (25—25a) in Eingriff steht, deren Festlegung im Schraube-Mutter-System (13—13a) eine gegenseitige Drehung zwischen der vom Motor (23) gedrehten Mutter (20) und der Schraube (24—34—38) und folglich während der Drehrichtung des Motors (13) eine gegenseitige axiale Verschiebung eines (24—32) der Elements des Schraube-Mutter-Systems (13—13a) gegenüber dem anderen erzeugt.

2. Vorrichtung nach Anspruch 1, dadurch gekennzeichnet, daß das bewegliche Teil (25—25a) eine Scheibe ist, die mit dem zugehörigen Element (24—34) des Schraube-Mutter-Systems (13—13a) drehfest verbunden und zwischen zwei drehfesten Bremsschuhen (26—26a) angeordnet ist.

3. Vorrichtung nach Anspruch 2, dadurch gekennzeichnet, daß die Bremsschuhe (26) von einem feststehenden Sattel gehalten werden, wobei die Scheibe (25) auf dem zugehörigen Element (24) des Schraube-Mutter-Systems (13) aufgekeilt und verschiebbar ist.

4. Vorrichtung nach einem der Ansprüche 1 bis 3, dadurch gekennzeichnet, daß das Schraube-Mutter-System (13) aus einer einzigen Mutter (8) und einer einzigen Schraube (24) besteht, die alle beide das zylindrische Teil (2) koaxial umgeben.

5. Vorrichtung nach einem der Ansprüche 1 bis 3, dadurch gekennzeichnet, daß das aufnehmende Teil des Schraube-Mutter-Systems (13a) aus einem verschiebbaren Ring (32) mit einer Reihe von Gewindebohrungen (33) besteht, die zur Achse (X—X) des rohrförmigen Teils (2—2a) parallel und um diese Achse verteilt sind, wobei das eindringende Teil dieses Schraube-Mutter-Systems aus einer Reihe von Schrauben (34) besteht die mit diesen Bohrungen (33) zusammenarbeiten, gegen axiale Verschiebung festgelegt sind und auf denen jeweils ein Ritzel (38) befestigt ist, wobei alle Ritzel mit einem Zahnkranz (39) kämmen, der mit dem beweglichen Teil (25a) der Bremse (14a) fest verbunden ist.

6. Vorrichtung nach Anspruch 5, dadurch gekennzeichnet, daß Reibelemente (32), die von einem mit dem Ring (32) drehfest verbundenen Teil (37) getragen werden, elastisch gegen den beweglichen Teil (25a) der Bremse (14a) gedrückt werden.

7. Vorrichtung nach einem der Ansprüche 1 bis 6, dadurch gekennzeichnet, daß das axial bewegliche Element (24—32) des Schraube-Mutter-Systems (13—13a) auf die ausdehnbare Hülse (12a) mittels eines aufgekeilten Organs (16—16a) einwirkt, das gegenüber dem anderen Element (8) des Schraube-Mutter-Systems oder einem mit diesem anderen Element (34a) drehfest verbundenen Teil (8a) verschiebbar ist.

8. Vorrichtung nach einem der Ansprüche 1 bis 7, dadurch gekennzeichnet, daß die ausdehnbare Hülse (12a) eine Manschette aus Elastomer ist.

9. Vorrichtung nach einem der Ansprüche 1 bis 8, dadurch gekennzeichnet, daß der Motor (23) ein Motor mit zwei Drehrichtungen ist.

10. Vorrichtung nach einem der Ansprüche 1 bis 9, dadurch gekennzeichnet, daß der Motor (23) zwei Drehzahlen hat.

## Claims

1. Device for setting a cylindrical workpiece (2—2a) in rotation by means of an elastically yielding sleeve (12—12a—12b) which is axially compressible and radially expansible in order to constitute an annular jaw engaging on said cylindrical workpiece (2—2a) under the action of a stuffing-box (16—16a—16b) and a pressure member (24—32), in turn actuated by a screw/nut system (13—13a), whereof one of the members (20) is a toothed wheel driven by the motor (23) for setting the cylindrical workpiece (2—2a) in rotation, characterised in that the other member (24—34, 38) of the screw/nut system (13—13a) is provided with circular toothing meshing with a disc (25—25a), the immobilization of which causes, in the screw/nut system (13—13a), a relative rotation between the nut (20) set in rotation by the motor (23) and the screw (24—34, 38) and consequently a relative axial movement of one (24—32) of the members of the screw/nut system (13—13a) with respect to the other, the direction of the relative rotation and of the relative axial movement depending on the direction of rotation of the motor (23).

2. Device according to claim 1, characterised in that the said movable part (25—25a) is a disc connected to rotate with the associated member (24—34) of the screw/nut system (13—13a) and located between two brake shoes (26—26a) which are prevented from rotating.

3. Device according to claim 2, characterised in that the shoes (26) are supported by a fixed stirrup member (27), the disc (25) being keyed in a sliding manner on the associated member (24) of the screw/nut system (13).

4. Device according to one of claims 1 to 3, characterised in that the screw/nut system (13) is constituted by a single nut (8) and a single screw (24) both surrounding the cylindrical workpiece (2) coaxially.

5. Device according to one of claims 1 to 3, characterised in that the female part of the screw/nut system (13a) is constituted by a sliding ring (32) which comprises a series of tapped holes (33) parallel to the axis (X—X) of the tubular workpiece (2—2a) and distributed about this axis, the male part of this screw/nut system being constituted by a series of screws (34) cooperating with these holes (33), prevented from moving by axial translation and fixed on each of which is a pinion (38), all the pinions meshing with a toothed ring (39) integral with said movable part (25a) of the brake (14a).

6. Device according to claim 5, characterised in that friction members (42) supported by a member (37) connected to rotate with the ring (32) are biased elastically against said movable part (25a) of the brake (14a).

7. Device according to one of claims 1 to 6, characterised in that the axially movable member (24—32) of the screw/nut system (13—13a) acts on the expansible sleeve (12a) through the intermediary of a member (16—16a) keyed in a sliding manner with respect to the other member (8) of the screw/nut system or to a part (8a) connected to rotate with this other member (34a).

8. Device according to one of claims 1 to 7, characterised in that the expansible sleeve (12a) is a small sleeve consisting of elastomeric material.

9. Device according to one of claims 1 to 8, characterised in that the motor (23) is a motor having two directions of rotation.

10. Device according to one of claims 1 to 9, characterised in that the motor (23) has two speeds.

FIG.1

FIG.2

0 033 908

FIG.3

FIG.4

FIG.5